# EUROPEAN PATENT APPLICATION

(11) **EP 4 780 050 A1**
(43) Date of publication of application: **22.07.2026**
(21) Application number: 24870467.8
(22) Date of filing: 12.09.2024
(51) Int. Cl.: H04W 24/02

(54) **COMMUNICATION METHOD, COMMUNICATION DEVICE, MEDIUM, AND PROGRAM PRODUCT**

(30) Priority: 28.09.2023 CN 202311295280
(71) Applicant: HUAWEI TECHNOLOGIES CO., LTD., Shenzhen 518129 (CN)
(72) Inventor: CHENG, Wenjie, Shenzhen, Guangdong 518129 (CN); GENG, Tingting, Shenzhen, Guangdong 518129 (CN); HU, Xingxing, Shenzhen, Guangdong 518129 (CN)
(74) Representative: MERH-IP Matias Erny Reichl Hoffmann Patentanwälte PartG mbB
(86) International application number: PCT/CN2024/118562
(87) International publication number: WO 2025/066923

(57) **Abstract**

Embodiments of this disclosure provide a communication method, a communication device, a computer-readable storage medium, and a computer program product. The communication method includes: sending a quality of experience (QoE) report about a terminal device to a second network device, where the QoE report includes first information at a first network device, and the first information is used to predict a QoE measurement result when the terminal device is under the second network device; and receiving predicted QoE information about the terminal device from the second network device, where the predicted QoE information includes the predicted QoE measurement result. In this manner, the second network device may predict a local QoE result of the terminal device and send the local QoE result to the first network device, so that the first network device and the second network device may identify a possible QoE problem in advance. Therefore, this helps to improve overall satisfaction of user equipment and improve radio resource efficiency.

## Description

This application claims priority to Chinese Patent Application No. 202311295280.9, filed with the China National Intellectual Property Administration on September 28, 2023 and entitled "COMMUNICATION METHOD, COMMUNICATION DEVICE, MEDIUM, AND PROGRAM PRODUCT", which is incorporated herein by reference in its entirety.

### TECHNICAL FIELD

This disclosure generally relates to the communication field, and more specifically, to a communication method, a communication device, a computer-readable storage medium, and a computer program product.

### BACKGROUND

With the development of technologies, artificial intelligence (Artificial Intelligence, AI) is increasingly used in communication. In the R17 version of the 3rd generation partnership project (3rd Generation Partnership Project, 3GPP), AI is proposed to be used in new radio (new radio, NR) to improve network performance and user experience through intelligent data collection and analysis. User experience (quality of experience, QoE) is a performance indicator used to evaluate overall subjective perception of a user for quality and performance (including effectiveness, availability, and the like) of a device, a network, a system, an application, or a service, which is, in other words, defined based on a comfort level of a service application. An operator can evaluate video service quality based on a QoE score to optimize a network. For some streaming services or voice services, signal quality alone cannot reflect user experience when a user uses these services, and a network is better optimized by performing measurement collection from the user equipment, to improve user experience. This type of measurement collection is referred to as QoE measurement collection, and may also be referred to as application-layer measurement collection. To ensure user experience, a QoE measurement collection mechanism needs to be further enhanced.

### SUMMARY

Embodiments of this application provide a communication method, a communication device, and a computer-readable storage medium. Therefore, a first network device selects a target cell based on predicted user experience information, and a target network device optimizes resource allocation based on the predicted user experience information. This helps to improve overall user satisfaction and improve radio resource efficiency.

According to a first aspect of this application, a communication method is provided. The method includes: sending a quality of experience (QoE) report about a terminal device to a second network device, where the QoE report includes first information at a first network device, and the first information is used to predict a QoE measurement result when the terminal device is under the second network device; and receiving predicted QoE information about the terminal device from the second network device, where the predicted QoE information includes the predicted QoE measurement result. In this manner, the first network device obtains the predicted QoE information, to identify a possible QoE problem in advance, so as to improve radio resource efficiency.

In some embodiments, the QoE report includes at least one of the following: a time index, a QoE measurement result, a service type, an identifier of the terminal device, an identifier of the first network device, an identifier of the second network device, an identifier of a cell, a quality of service QoS parameter, a radio configuration, resource status information, or signal quality of the terminal device in a cell of the second network device. Therefore, the QoE report including different content may be indicated to the second network device.

In some embodiments, the predicted QoE information further includes at least one of the following: the identifier of the terminal device, the identifier of the second network device, the service type, the identifier of the cell, or the time index. Therefore, the first network device may obtain information related to the QoE result predicted by the UE at the second network device.

In some embodiments, the method further includes: sending the QoE report to a third network device to which the terminal device can be handed over. Therefore, the first network device may send the QoE report to a plurality of candidate target network devices. In some embodiments, the method further includes receiving the predicted QoE information about the terminal device from the third network device. Therefore, the first network device may obtain the predicted QoE information from the plurality of candidate target network devices. In some embodiments, the method further includes: selecting, from the second network device and the third network device based on the predicted QoE information, a target network device to which the terminal device is to be handed over; and sending a first indication to the target network device, where the first indication indicates that the terminal device is to be handed over to the target network device. Therefore, the first network device may select an appropriate target network device for the terminal device.

In some embodiments, selecting, from the second network device and the third network device, the target network device to which the terminal device is to be handed over includes selecting the second network device as the target network device, and the method further includes: receiving at least one of the following information from the second network device: the identifier of the terminal device, the predicted QoE measurement result, or precision of the predicted QoE measurement result. Therefore, the first network device may learn the precision of the predicted result of the selected target network device.

In some embodiments, an indicator of the precision is indicated by the first network device to the second network device. Therefore, the second network device may feed back the precision of the predicted result based on the metric. In some embodiments, an indicator of the precision is indicated to the second network device in a handover request regarding the terminal device. Therefore, the indicator of the precision may be flexibly sent to the second network device.

In some embodiments, the method of the first network device further includes: receiving a second indication from the second network device when the predicted QoE measurement result is less than a threshold, where the second indication indicates that the second network device rejects handover of the terminal device. Therefore, this can prevent providing a low-quality service to the user equipment.

In some embodiments, the prediction of the QoE measurement result when the terminal device is under the second network device is performed based on an artificial intelligence/machine learning (AI/ML) model. Therefore, prediction accuracy and efficiency can be improved.

In some embodiments, at least one of the QoE report or the predicted QoE information is transmitted through an Xn interface. Therefore, the QoE report or the predicted QoE information may be transmitted between network devices.

According to a second aspect of this application, a communication method is provided. The method includes: receiving a quality of experience (QoE) report about a terminal device from a first network device, where the QoE report includes first information at the first network device, the first information is used to predict a QoE measurement result when the terminal device is under a second network device; predicting the QoE measurement result based on the QoE report and auxiliary information at the second network device; and sending predicted QoE information about the terminal device to the first network device, where the predicted QoE information includes the predicted QoE measurement result. In this manner, the predicted QoE information may be generated to identify a possible QoE problem, so as to improve radio resource efficiency.

In some embodiments, predicting the QoE measurement result includes: inputting the QoE report and the auxiliary information into an artificial intelligence/machine learning (AI/ML) model, to obtain the predicted QoE measurement result. Therefore, prediction accuracy and efficiency can be improved.

In some embodiments, the QoE report includes at least one of the following: a time index, a QoE measurement result, a service type, an identifier of the terminal device, an identifier of the first network device, an identifier of the second network device, an identifier of a cell, a quality of service QoS parameter, a radio configuration, resource status information, or signal quality of the terminal device in a cell of the second network device. Therefore, the second network device may obtain the QoE report including different content.

In some embodiments, the auxiliary information includes at least one of the following: historical resource status information of the second network device, predicted resource status information of the second network device, the identifier of the second network device, the identifier of the cell, the time index, a quantity of at least one terminal device, radio resource status information, a quantity of radio resource control RRC connections, historical average signal quality of at least one terminal device, a historical average QoE measurement result of at least one terminal device, and a historical average QoS parameter of at least one terminal device. Therefore, the second network device may predict the QoE measurement result based on the auxiliary information including different content.

In some embodiments, the auxiliary information further includes at least one of the following: historical resource status information of the second network device, predicted resource status information of the second network device, the identifier of the second network device, the identifier of the cell, the time index, the identifier of the terminal device, signal quality for the terminal device, a QoE measurement result for the terminal device, or a QoS parameter for the terminal device. Therefore, the second network device may predict the QoE measurement result based on the auxiliary information including different content.

In some embodiments, the predicted QoE information further includes at least one of the following: the identifier of the terminal device, the identifier of the second network device, the service type, the identifier of the cell, or the time index. Therefore, information related to the QoE result predicted at the second network device may be indicated to the first network device.

In some embodiments, the method further includes: receiving a first indication from the first network device, where the first indication indicates that the terminal device is to be handed over to the second network device; and performing resource optimization for the terminal device based on the predicted QoE information. Therefore, the second network device may optimize a resource for the terminal device.

In some embodiments, the resource optimization includes at least one of the following: selecting a handover manner of the terminal device; optimizing a random access channel RACH resource; or optimizing a scheduling transmission resource. Therefore, the second network device may optimize a resource in a plurality of manners.

In some embodiments, the method further includes: receiving measured QoE information from the terminal device; comparing the measured QoE information and the predicted QoE information; and performing, based on the comparison, at least one of updating, training, or monitoring of an AI/ML model for obtaining the predicted QoE measurement result. Therefore, the second network device may optimize the model based on the measured QoE information, to improve model performance.

In some embodiments, the method further includes: sending at least one of the following information to the first network device: the identifier of the terminal device, the predicted QoE measurement result, or precision of the predicted QoE measurement result. Therefore, the precision of the predicted QoE measurement result may be indicated to the first network device.

In some embodiments, an indicator of the precision is indicated by the first network device to the second network device. Therefore, the second network device may feed back the precision of the predicted result based on the metric. In some embodiments, the indicator of the precision is indicated to the second network device in a handover request regarding the terminal device. Therefore, the indicator of the precision may be flexibly sent to the second network device.

In some embodiments, the method further includes: based on determining that the predicted QoE measurement result is less than a threshold, sending a second indication to the first network device, where the second indication indicates that the second network device rejects handover of the terminal device. Therefore, this can prevent providing a low-quality service to the user equipment.

In some embodiments, at least one of the QoE report or the predicted QoE information is transmitted through an Xn interface. Therefore, the QoE report or the predicted QoE information may be transmitted between network devices.

According to a third aspect of this application, a communication method is provided. The method includes: sending, to a second network device, a request message used to request auxiliary information at the second network device, where the auxiliary information is used to predict a quality of experience (QoE) measurement result when a terminal device is under the second network device; receiving the auxiliary information from the second network device; predicting the QoE measurement result based on the auxiliary information and a QoE report, where the QoE report includes information used to predict the QoE measurement result at a first network device; and sending predicted QoE information about the terminal device to the second network device, where the predicted QoE information includes the predicted QoE measurement result. In this manner, the predicted QoE information may be generated to identify a possible QoE problem, so as to improve radio resource efficiency.

In some embodiments, predicting the QoE measurement result includes: inputting the QoE report and the auxiliary information into an artificial intelligence/machine learning (AI/ML) model, to obtain the predicted QoE measurement result. Therefore, prediction accuracy and efficiency can be improved.

In some embodiments, the request message includes at least one of the following: a measurement identifier identifying an auxiliary information request process, an identifier of the second network device, an identifier of a cell, a list of at least one terminal device identifier selected by the first network device, a service type, a third indication for content of the auxiliary information, or time information for the auxiliary information. Therefore, the first network device may request the auxiliary information in a plurality of manners.

In some embodiments, the auxiliary information includes at least one of the following: a measurement identifier, an identifier of the second network device, an identifier of a cell, a list of at least one terminal device identifier, a service type, content of the auxiliary information indicated by a third indication, a fourth indication of content of unsupported auxiliary information, or a time index. Therefore, the first network device may predict the QoE measurement result based on the auxiliary information including different content.

In some embodiments, the content of the auxiliary information includes at least one of the following: historical QoE information, the predicted QoE information, historical resource status information, predicted resource status information, a QoS parameter, a radio configuration, historical signal quality, or predicted signal quality. Therefore, the first network device may predict the QoE measurement result based on the auxiliary information including different content.

In some embodiments, the QoE report includes at least one of the following: a time index, a QoE measurement result, a service type, an identifier ID of the terminal device, an identifier of the first network device, an identifier of the second network device, an identifier of a cell, a quality of service QoS parameter, a radio configuration, resource status information, or signal quality of the terminal device in a cell of the second network device. Therefore, the first network device may predict the QoE measurement result based on the QoE report including different content.

In some embodiments, the predicted QoE information further includes at least one of the following: the identifier of the terminal device, the identifier of the second network device, the service type, the identifier of the cell, or the time index. Therefore, the first network device may obtain information related to the predicted QoE result.

In some embodiments, the method further includes: sending the request message to a third network device to which the terminal device can be handed over. Therefore, the first network device may send the request message to a plurality of candidate target network devices. In some embodiments, the method further includes: receiving the auxiliary information from the third network device. Therefore, the first network device may obtain the auxiliary information from the plurality of candidate target network devices.

In some embodiments, sending the predicted QoE information to the second network device includes: selecting, from the second network device and the third network device based on the predicted QoE information, a target network device to which the terminal device is to be handed over; and sending the predicted QoE information to the second network device. Therefore, the first network device may select an appropriate target network device for the terminal device.

In some embodiments, the method further includes: sending a first indication to the second network device, where the first indication indicates that the terminal device is to be handed over to the second network device. Therefore, the second network device may be notified that the terminal device is to be handed over locally. In some embodiments, the method further includes: receiving at least one of the following information from the second network device: the identifier of the terminal device, the predicted QoE measurement result, or precision of the predicted QoE measurement result; and performing, based on information, at least one of updating, training, or monitoring on an AI/ML model for obtaining the predicted QoE measurement result. Therefore, prediction accuracy and efficiency can be improved.

In some embodiments, at least one of the QoE report or the predicted QoE information is transmitted through an Xn interface. Therefore, the QoE report or the predicted QoE information may be transmitted between network devices.

According to a fourth aspect of this application, a communication method is provided. The method includes: receiving, from a first network device, a request message used to request auxiliary information at a second network device, where the auxiliary information is used to predict a quality of experience (QoE) measurement result when a terminal device is under the second network device; sending the auxiliary information to a first network device based on the received request message; and receiving predicted QoE information about the terminal device from the first network device, where the predicted QoE information includes the predicted QoE measurement result. In this manner, the predicted QoE information may be generated in assistance to identify a possible QoE problem, so as to improve radio resource efficiency.

In some embodiments, the request message includes at least one of the following: a measurement identifier identifying an auxiliary information request process, an identifier of the second network device, an identifier of a cell, a list of at least one terminal device identifier selected by the first network device, a service type, a third indication for content of the auxiliary information, or time information for the auxiliary information. Therefore, the first network device may request the auxiliary information in a plurality of manners.

In some embodiments, the auxiliary information includes at least one of the following: a measurement identifier, an identifier of the second network device, an identifier of a cell, a list of at least one terminal device identifier, a service type, content of the auxiliary information indicated by a third indication, a fourth indication of content of unsupported auxiliary information, or a time index. Therefore, the first network device may predict the QoE measurement result based on the auxiliary information including different content.

In some embodiments, the content of the auxiliary information includes at least one of the following: historical QoE information, the predicted QoE information, historical resource status information, predicted resource status information, a QoS parameter, a radio configuration, historical signal quality, or predicted signal quality. Therefore, the first network device may predict the QoE measurement result based on the auxiliary information including different content.

In some embodiments, the predicted QoE information further includes at least one of the following: the identifier of the terminal device, the identifier of the second network device, the service type, the identifier of the cell, or the time index. Therefore, the first network device may obtain information related to the predicted QoE result.

In some embodiments, the method further includes: receiving a first indication from the first network device, where the first indication indicates that the terminal device is to be handed over to the second network device; and performing resource optimization for the terminal device based on the predicted QoE information. Therefore, the second network device may optimize a resource for the terminal device.

In some embodiments, the method further includes: receiving measured QoE information from the terminal device; comparing the measured QoE information and the predicted QoE information; and evaluating precision of the predicted QoE measurement result based on the comparison. Therefore, performance of the model may be evaluated.

In some embodiments, the method of the second network device further includes: sending at least one of the following information to the first network device: the identifier of the terminal device, the predicted QoE measurement result; or precision of the predicted QoE measurement result. Therefore, the precision of the predicted QoE measurement result may be indicated to the first network device.

In some embodiments, an indicator of the precision is indicated by the first network device to the second network device. Therefore, the second network device may feed back the precision of the predicted result based on the metric. In some embodiments, the indicator of the precision is indicated to the second network device in a handover request regarding the terminal device. Therefore, the indicator of the precision may be flexibly sent to the second network device.

In some embodiments, the prediction of the QoE measurement result when the terminal device is under the second network device is performed based on an artificial intelligence/machine learning (AI/ML) model. Therefore, prediction accuracy and efficiency can be improved.

In some embodiments, the predicted QoE information is transmitted through an Xn interface. Therefore, the predicted QoE information may be transmitted between network devices.

According to a fifth aspect of this application, a communication apparatus is provided. The communication apparatus includes a processor and a memory storing instructions. When the instructions are executed by the processor, the communication apparatus is enabled to perform any method according to any one of the first aspect to the fourth aspect and the implementations thereof. According to a sixth aspect of this application, a computer-readable storage medium is provided. The computer-readable storage medium stores instructions, and when the instructions are executed by an electronic device, the electronic device is enabled to perform any method according to any one of the first aspect to the fourth aspect and the implementations thereof.

According to a seventh aspect of this application, a chip is provided. The chip includes a processing circuit, configured to perform any method according to any one of the first aspect to the fourth aspect and the implementations thereof.

According to an eighth aspect of this application, a computer program product is provided. The computer program product includes instructions, and when the instructions are executed by an electronic device, the electronic device is enabled to perform any method according to any one of the first aspect to the fourth aspect and the implementations thereof.

It should be understood that the content described in the summary is not intended to limit key or important features of this application or limit the scope of this application. The following descriptions facilitate understanding of other features of this application.

### BRIEF DESCRIPTION OF DRAWINGS

FIG. 1A is a diagram of a communication system in which an embodiment of this disclosure may be implemented;
FIG. 1B is a diagram of a central unit (central unit, CU)-distributed unit (distributed unit, DU) (CU-DU) architecture related to an embodiment of this disclosure;
FIG. 1C is a diagram of an AI application framework in NR related to an embodiment of this disclosure;
FIG. 1D is a diagram of a QoE measurement procedure related to an embodiment of this disclosure;
FIG. 2 is a diagram of first interaction signaling of a communication process according to some embodiments of this disclosure;
FIG. 3 is a diagram of AI input/output related to an embodiment of this disclosure;
FIG. 4 illustrates a first example process of a communication process according to some embodiments of this disclosure;
FIG. 5 is a diagram of second interaction signaling of a communication process according to some embodiments of this disclosure;
FIG. 6 illustrates a second example process of a communication process according to some embodiments of this disclosure;
FIG. 7 is a schematic flowchart of a method implemented at a first network device according to an embodiment of this disclosure;
FIG. 8 is a schematic flowchart of a method implemented at a second network device according to an embodiment of this disclosure;
FIG. 9 is a schematic flowchart of a method implemented at a first network device according to an embodiment of this disclosure;
FIG. 10 is a schematic flowchart of a method implemented at a second network device according to an embodiment of this disclosure;
FIG. 11 is a simplified block diagram of an example device in a possible implementation according to an embodiment of this application; and
FIG. 12 is a simplified block diagram of an example device in a possible implementation according to an embodiment of this application.

Throughout all the accompanying drawings, same or similar reference numerals represent same or similar components.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this disclosure may be implemented according to any appropriate communication protocol, including but not limited to cellular communication protocols such as 3rd generation (3rd Generation, 3G), 4th generation (4G), 5th generation (5G), and future communication protocols (for example, 6th generation (6G)), wireless local area network communication protocols such as the Institute of Electrical and Electronics Engineers (Institute of Electrical and Electronics Engineers, IEEE) 802.11, and/or any other protocols currently known or developed in the future.

Technical solutions in embodiments of this disclosure are applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications Service, UMTS), a long-term evolution (Long-Term Evolution, LTE) system, a wideband code division multiple access (Wideband Code Division Multiple Access, WCDMA) system, a code division multiple access 2000 (Code Division Multiple Access, CDMA2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation (5G) system (for example, new radio (New Radio, NR)), a future communication system (for example, a 6th generation (6G) system), and the like.

For the purpose of illustration, the following describes embodiments of this disclosure in the context of a 5G communication system in 3GPP. However, it should be understood that embodiments of this disclosure are not limited to the communication system, but may be applied to any communication system having a similar problem, for example, a wireless local area network (WLAN), a wired communication system, or another communication system developed in the future.

The term "terminal" or "terminal device" used in this disclosure means any terminal device that can perform wired or wireless communication with a network device or between terminal devices. The terminal device may be sometimes referred to as a user equipment or a UE. The terminal device may be any type of mobile terminal, fixed terminal, or portable terminal. The terminal device may be one of various wireless communication devices that have a wireless communication function. The terminal device may be deployed on land, including indoor or outdoor, handheld, or vehicle-mounted deployment; may be deployed on water (for example, on a ship); or may be deployed in the air (for example, on an aircraft, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), or a wireless terminal device in a smart home (smart home), or may alternatively be a user equipment (user equipment, UE) or the like.

The term "network node" or "network device" used in this disclosure is a device in a wireless network, and is an entity or a node that may be configured to communicate with a terminal device, for example, may be an access network device. The access network device may be an apparatus that is deployed in a radio access network and that provides a wireless communication function for a mobile terminal, for example, a radio access network (radio access network, RAN) node that connects the terminal device to a wireless network. Currently, for example, the RAN node may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or integrated access and backhaul (integrated access and backhaul, IAB), or the like. In a network structure, the network device may alternatively be a central unit (central unit, CU) or a distributed unit (distributed unit, DU), or the network device may include a CU and a DU. It may be understood that the base station is divided into the CU and the DU from the perspective of a logical function. The CU and the DU may be physically separated, or may be deployed together. This is not specifically limited in embodiments of this application. One CU may be connected to one DU, or a plurality of DUs may share one CU, so that costs can be reduced and network expansion is easy. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and the remaining radio link control (radio link control, RLC) layer, media access control (media access control, MAC) layer, and physical layer are deployed on the DU. Embodiments of this application are not completely limited to the foregoing protocol stack splitting manner, and there may be another splitting manner. The following further describes in detail this application with reference to accompanying drawings. Specific operation methods, function descriptions, and the like in method embodiments may also be applied to apparatus embodiments or system embodiments.

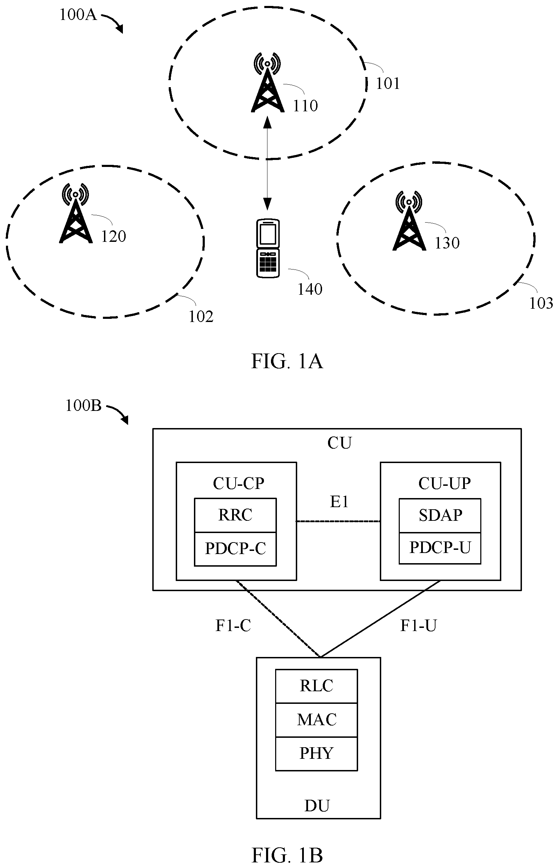

FIG. 1A is a diagram of a communication system 100A in which an embodiment of this disclosure may be implemented. As shown in FIG. 1A, the system 100A may include a first network device 110, a second network device 120, a third network device 130, and a terminal device 140. The terminal device 140 may have a wireless transceiver function, can perform communication (for example, wireless communication) with one or more network devices in one or more communication systems, and accepts a network service provided by the network device. The network device herein includes but is not limited to the network device shown in the figure. For example, the terminal device 140 may be connected to the first network device 110 through an access link. The first network device 110 manages a cell 101, the second network device 120 manages a cell 102, and the third network device 130 manages a cell 103. It should be understood that the cell herein includes but is not limited to the cell shown in the figure. The first network device 110 may communicate with the second network device 120 and the third network device 130. For example, the first network device 110 may directly communicate with the second network device 120 or the third network device 130 through an Xn interface.

In some embodiments, a QoE measurement result of the cell 101 under the first network device 110 (also referred to as a source station) accessed by the terminal device 140 deteriorates, and the first network device 110 considers that the terminal device 140 needs to be handed over to another network device or cell. The terminal device 140 may be handed over to the cell 102 under the second network device 120 (also referred to as a target station) or the cell 103 under the third network device 130.

It should be understood that quantities of terminals and network nodes shown in FIG. 1A are merely used as examples. There may be more or fewer terminals, network devices, and cells. This is not limited in this disclosure.

In addition, it should be understood that the communication system 100A may be used in various scenarios. For example, an application scenario of the communication system 100A includes but is not limited to an existing communication system or a future evolved communication system like a 4th generation (4G) system, a 5th generation (5G) system, a new radio (new radio, NR) communication system, or a non-terrestrial network (Non-Terrestrial Network, NTN) system. In addition, it should also be understood that the foregoing communication may comply with any appropriate communication technology and a corresponding communication standard.

FIG. 1B is a diagram of a CU-DU architecture 100B related to an embodiment of this disclosure. As shown in FIG. 1B, a CU and a DU are connected through an F1 interface. The CU indicates that a gNB is connected to a core network through an Ng interface. A network device in embodiments of this disclosure may alternatively be a central unit-control plane (CU-CP) node or a central unit-user plane (CU-UP) node. Alternatively, the network device may include a CU-CP and a CU-UP. The CU-CP is responsible for functions of a control plane, and mainly includes RRC and PDCP-C. The PDCP-C is mainly responsible for data encryption and decryption, integrity protection, data transmission, and the like on a control plane. The CU-UP is responsible for a user plane function, and mainly includes an SDAP and PDCP-U. The SDAP is mainly responsible for processing data of the core network and mapping a flow to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP indicates that the gNB is connected to the core network through an Ng interface, and is connected to the DU through F1-C (control plane). The CU-UP is connected to the DU through F1-U (user plane). Certainly, in another possible implementation, the PDCP-C is alternatively in the CU-UP.

An access network device mentioned in embodiments of this disclosure may be a device including a CU or a DU, a device including a CU and a DU, or a device including a control plane CU node (a CU-CP node), a user plane CU node (a CU-UP node), and a DU node. A radio access network device and a terminal device may be deployed on land, including indoor or outdoor, handheld, or vehicle-mounted deployment; or may be deployed on water; or may be deployed on a plane, a balloon, and a satellite in the air. Application scenarios of the radio access network device and the terminal device are not limited in embodiments of this application.

Embodiments of this disclosure may be applicable to downlink signal transmission, may be also applicable to uplink signal transmission, and may be further applicable to device-to-device (device-to-device, D2D) signal transmission. For the downlink signal transmission, a sending device is a radio access network device, and a corresponding receiving device is a terminal device. For the uplink signal transmission, a sending device is a terminal device, and a corresponding receiving device is a radio access network device. For the D2D signal transmission, a sending device is a terminal device, and a corresponding receiving device is also a terminal device. A signal transmission direction is not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both of a licensed spectrum and an unlicensed spectrum. Communication between the radio access network device and the terminal device and communication between the terminal devices may be performed by using a spectrum below 6 gigahertz (gigahertz, GHz), or a spectrum above 6G, or both a spectrum below 6G and a spectrum above 6G. Spectrum resources used by the radio access network device and the terminal device are not limited embodiments of this disclosure.

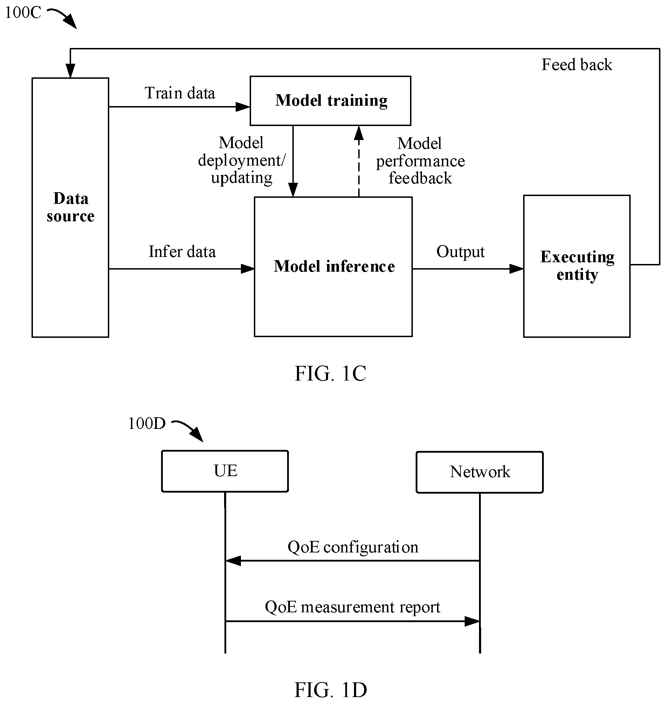

FIG. 1C is a diagram of an AI application framework 100C in NR according to some embodiments of this disclosure. As shown in FIG. 1C, a data source (data source) stores data input from a gNB, a gNB-CU, a gNB-DU, a UE, or another management entity, and is used as a database for AI model training and data analysis and inference. A model training host (model training host) analyzes training data (training data) provided by the data source to provide an optimal AI model. A model inference host (model inference host) uses an AI model to provide a reasonable Al-based prediction about network operation or guide a network to make a policy adjustment based on data provided by the data source. A related policy adjustment is uniformly planned by an executing entity (actor), and is sent to a plurality of network entities for operation. In addition, after the related policy is applied, specific performance of the network is input into the database again for storage.

QoE is a performance indicator used to evaluate overall subjective perception of a user for quality and performance (including effectiveness, availability, and the like) of a device, a network, a system, an application, or a service, which is, in other words, defined based on a comfort level of a service application. An operator can evaluate video service quality based on a QoE score to optimize a network.

For some streaming services or voice services, such as a dynamic adaptive streaming over HTTP (dynamic adaptive streaming over HTTP, DASH) service, a multimedia telephony service for an IP multimedia subsystem (IMS) (multimedia telephony service for IMS, MTSI), and a virtual reality (VR) service, signal quality alone cannot reflect user experience when a user uses these services. An operator expects to know user experience, so as to optimize the network to improve user experience. This type of measurement collection is referred to as QoE measurement collection, and may also be referred to as application-layer measurement collection.

A QoE measurement collection (QoE measurement collection, QMC) function supports collection of application-layer measurement from a UE. Supported service types include:
- QoE measurement collection of a DASH streaming media service;
- QoE measurement collection of an MTSI service; and
- QoE measurement collection of a VR service.

QoE measurement collection may be supported only in an RRC_CONNECTED state. Signaling-based and management-based QoE measurement collection are supported. QMC is activated through a direct configuration (management-based activation) of an operation administration and maintenance (operation administration and maintenance, OAM) system in a gNB or by sending signaling from an OAM through a 5GC (signaling-based activation), where UE-associated QoE configuration is included. One or more QoE measurement collection tasks may be activated for each service type on one UE, and each QoE measurement configuration is uniquely identified by a QoE reference. When a UE is configured with multi-radio dual connectivity (multi-radio dual connectivity, MR-DC), only an MN can configure a QoE configuration.

For signaling-based QoE measurement, the OAM initiates QoE measurement activation for a specific UE through the 5GC, and the gNB receives one or more QoE measurement configurations through UE-associated signaling. The signaling-based activated QoE measurement configuration includes an application-layer measurement configuration list and information corresponding to QoE measurement collection, such as a QoE reference, a service type, an MCE IP address, a slice range, an area range, MDT alignment information, and an indication of an available RAN-visible QoE metric.

For the management-based QoE measurement activation, the OAM directly sends one or more QoE measurement configurations to the gNB. The management-based activated QoE measurement configuration further includes an application-layer measurement configuration list and corresponding QoE measurement collection information. The gNB selects a UE that meets a QoE measurement capability, an area range, and a slice range.

An application-layer measurement configuration received by the gNB from the OAM or a CN is encapsulated in a transparent container, and is forwarded to a UE as an application-layer configuration in an RRCReconfiguration message (where a same message may include a plurality of configurations). An application-layer measurement report received from an application layer of a UE is encapsulated in a transparent container, and is sent to a network through a measurement report application-layer message.

FIG. 1D is a diagram of a QoE measurement procedure related to an embodiment of this disclosure. A UE may send a plurality of application-layer measurement reports to a gNB in one measurement report application-layer message. To allow transmission of an application-layer measurement report that exceeds a maximum PDCP SDU size, the gNB may enable segmentation of the measurement report application-layer message. An RRC identifier transmitted in RRC signaling is used to identify an application-layer measurement configuration and report between the gNB and the UE. The RRC identifier is mapped to a QoE reference in the gNB. The gNB forwards the application-layer measurement report together with the QoE reference to an MCE. The gNB may release one or more application-layer measurement configurations from the UE at any time in an RRCReconfiguration message. The gNB may also configure the UE, to report when a QoE measurement session configured for specific application-layer measurement starts or stops.

RAN-visible QoE measurement is configured by the gNB for the UE, where a subset of a configured QoE metric is reported from the UE to the gNB as an explicit IE that can be read by the gNB. The gNB may use a RAN-visible QoE measurement value for network optimization. A DASH streaming medium and a VR service support the RAN-visible QoE measurement. The gNB configures the RAN-visible QoE measurement, to collect all or a part of available RAN-visible QoE metrics, where an indication of metric availability is received from an OAM or a 5GC. An available RAN-visible QoE metric set is a subset of a metric that has been configured as a part of a QoE measurement configuration encapsulated in an application-layer container. The UE may also report, together with a RAN-visible QoE measurement result, a PDU session identifier corresponding to a service on which QoE measurement is performed.

The RAN-visible QoE measurement may support a plurality of concurrent RAN-visible QoE measurement configurations and reports, and each of the RAN-visible QoE measurement configurations and reports is identified by an RRC identifier identical to an RRC identifier of a QoE measurement configuration and measurement report. After receiving the RAN-visible QoE measurement configuration, an RRC layer of the UE forwards the configuration to an application layer, to indicate a service type, an RRC identifier, and a period. A RAN-visible QoE configuration can only be configured when there is a corresponding QoE measurement configuration for a same service type configured in the UE. The application layer sends, to an AS layer of the UE, a RAN-visible QoE measurement report associated with the RRC identifier. If no reporting period is defined in the RAN-visible QoE configuration, the UE sends both the RAN-visible QoE measurement report and a QoE measurement report to the gNB in a same measurement report application-layer message, unless a QoE measurement collection pause indication is received (for example, in a case of RAN overload). When QoE measurement collection is paused, if no reporting period is defined in the RAN-visible QoE configuration, an encapsulated QoE report is stored at the RRC layer of the UE, but the RAN-visible QoE report continues to be reported to the gNB, and a reporting period of the encapsulated QoE report is configured. When the gNB configures a dedicated RAN-visible QoE reporting period, the RAN-visible QoE measurement may be reported with a different reporting period than a reporting period of corresponding encapsulated QoE measurement. The application layer of the UE may measure a RAN-visible QoE metric based on this reporting period. The gNB may release one or more RAN-visible QoE measurement configurations from the UE at any time in an RRCReconfiguration message.

In a current QoE mechanism, a QoE measurement configuration for an NG interface includes: a QoE reference, a service type, a QMC area range, an MCE IP address, a QoE measurement status, an application-layer measurement configuration container, a measurement configuration application-layer identifier, a QMC slice support list, an MDT alignment information, and an indication of an available RAN-visible QoE metric.

The QoE reference includes a mobile country code (MCC), a mobile network code (MNC), and a QoE measurement collection function identifier (MCC+MNC+QMC ID), where the MCC and MNC together with a QMC activation request from a management system identify a PLMN that includes the management system, and the QMC ID is a 3-byte octet string. The service type represents a service type of QoE measurement, which may be DASH streaming, an MTSI, or VR. The QMC area range is used to indicate a QMC measurement collection range, and may be a cell identifier list, a tracking area (Tracking area, TA) list, a tracking area identity (tracking area identity, TAI) list, or a PLMN list. The MCE IP address is an IP address of the entity that receives the QoE measurement report. The QoE measurement status indicates whether QoE measurement is initiated and exists in a case of NG handover. The application-layer measurement configuration container includes an application-layer measurement configuration, which is invisible to a RAN side, and includes QoE measurement configurations of different services, such as a throughput, an initial playback delay, buffered playback duration, a bandwidth, a height, a width, a bit rate, response time, device information, jitter duration, and out-of-synchronization duration. The measurement configuration application-layer identifier indicates an identifier of an application-layer measurement configuration, which corresponds to a MeasConfigAppLayerId information element defined in a Uu interface. This information element is present only when a message including this information element is related to NG-based handover. The QMC slice support list is used to indicate information about a slice supported by QMC. The MDT alignment information indicates MDT measurement that needs to be aligned. The indication of the available RAN-visible QoE metric is used to indicate whether the gNB can perform RAN-visible QoE measurement collection.

A QoE measurement configuration at the Uu interface includes: a service type, an application-layer measurement configuration container, a measurement configuration application-layer identifier, and a RAN-visible QoE parameter configuration. The RAN-visible QoE parameter configuration includes a quantity of buffer level entries, a visible running period, and a report playback delay media startup. The quantity of buffer level entries includes a maximum quantity of buffer level entries that can be reported by RAN-visible application-layer measurement. The visible running period represents a period reported by the RAN-visible application-layer measurement. The report playback delay media startup indicates whether the UE should report a media startup playback delay of the RAN-visible application-layer measurement.

A QoE measurement result at the Uu interface includes: an application-layer measurement configuration identifier, an application-layer report container, and a RAN-visible QoE measurement result. The RAN-visible QoE measurement result includes an application-layer buffer level list, a media startup playback delay, and a PDU session list. The application-layer buffer-level list represents a list of application-layer buffer levels, and a unit of each application layer buffer level is ms. A value 0 corresponds to 0 ms, a value 1 corresponds to 10 ms, a value 2 corresponds to 20 ms, and the rest may be deduced by analogy. If a buffer level is greater than a maximum value 30000 (5 minutes), the UE reports 30000. The media startup playback delay is a media startup application-layer playback delay, and a unit is ms. A value 0 corresponds to 0 ms, a value 1 corresponds to 1 ms, a value 2 corresponds to 2 ms, and the rest may be deduced by analogy. If the media startup playback delay is greater than a maximum value 30000 ms, the UE reports 30000. The PDU session list includes an identifier of a PDU session, or an identifier of a PDU session, and is used for an application data flow of the RAN-visible application-layer measurement.

A QoE measurement result sent by the gNB to the MCE further includes the QoE reference, but does not include the RAN-visible QoE measurement result mentioned above. The RAN-visible QoE measurement result is only used by the RAN side to optimize a network resource. In a conventional QoE mechanism, a RAN/OAM optimizes network resource allocation based on a historical QoE measurement result, and problem identification is delayed, that is, the network resource allocation cannot be optimized in advance by identifying a QoE problem in advance.

Based on the foregoing research and analysis, an embodiment of this disclosure provides a communication method. In the method, a quality of experience (QoE) report about a terminal device is sent to a second network device, where the QoE report includes first information at a first network device, and the first information is used to predict a QoE measurement result when the terminal device is under the second network device; and predicted QoE information about the terminal device is received from the second network device, where the predicted QoE information includes the predicted QoE measurement result. In this manner, the second network device may predict a local QoE result of the terminal device and send the local QoE result to the first network device, so that the first network device and the second network device may identify a possible QoE problem in advance. Therefore, this helps to improve overall satisfaction of the user equipment and improve radio resource efficiency.

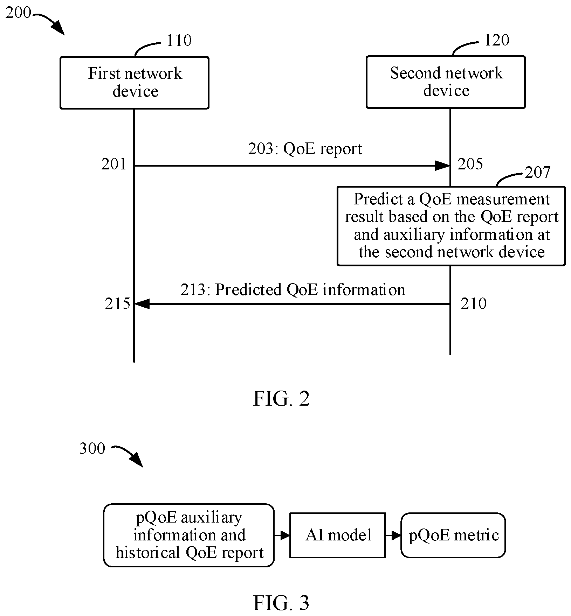

FIG. 2 is a diagram of first interaction signaling of a communication process according to some embodiments of this disclosure. For clarity of discussion without any limitation, a process 200 is discussed with reference to FIG. 1A.

In the process 200, a first network device 110 sends (201) a quality of experience (QoE) report (203) about a terminal device to a second network device 120. The QoE report (203) includes first information at the first network device 110, and the first information is used to predict a QoE measurement result when the terminal device is under the second network device 120. That the terminal device is under the second network device 120 may mean that the terminal device is handed over to the second network device and is served by the second network device. Correspondingly, the second network device 120 receives (205) the QoE report (203) from the first network device 110. Optionally, the first network device 110 further sends a QoE report to a third network device to which the terminal device can be handed over. It should be understood that the first network device may select a plurality of candidate network devices including the second network device and the third network device, and send the QoE report to the plurality of candidate network devices.

For example, the first network device 110 receives the QoE measurement result from the terminal device, and the first network device 110 determines, based on an implementation, whether to trigger a handover procedure for the terminal device. For example, when detecting that the QoE measurement result of the terminal device is lower than a specific threshold, the first network device 110 considers that the terminal device needs to be handed over to another base station or cell. The first network device 110 may generate the QoE report based on the QoE measurement result received from the terminal device, and then send the QoE report of the terminal device to the candidate network device, so that the candidate network device predicts a QoE result of the UE in the candidate network device or a cell of the candidate network device. In other words, the QoE report may be used as input data of an AI model used to predict QoE in the candidate network device.

In some embodiments, the QoE report may include: a time index, a QoE measurement result, a service type, an identifier (ID) of the terminal device, an identifier of the first network device 110, an identifier of the second network device 120, an identifier of a cell, a quality of service (QoS) parameter, a radio configuration, resource status information, signal quality of the terminal device in a cell of the second network device 120, or one or more of the foregoing. For example, the QoE measurement result may be a RAN-visible QoE measurement result. The radio configuration may include dual connectivity (dual connectivity, DC), carrier aggregation (carrier aggregation, CA), or the like. The signal quality may include reference signal received power (reference signal received power, RSRP), reference signal received quality (reference signal received quality, RSRQ), a signal to interference plus noise ratio (signal to interference plus noise ratio, SINR), a bit error rate, a throughput, and the like. Content of the QoE report may have a specific association relationship. A possible implementation is as follows, that is, a RAN-visible QoE measurement result, a QoS parameter, a radio configuration, and signal quality of the UE in a candidate target cell of each cell of each service type in historical time:
- gNB identifier
- UE identifier
- Service type
   - Time index
      - Source station cell identifier
         - RAN-visible QoE measurement result
         - QoS parameter
         - Radio configuration
         - Resource status information
            - Radio resource status information
            - Quantity of activated UEs
            - Quantity of RRC connections
- Signal quality of a candidate target cell
   - Target candidate cell identifier
   - Signal quality measurement result
      - Time index
      - RSRP
      - RSRQ
      - SINR
      - Bit error rate
      - Throughput
      - Packet loss rate

Still refer to FIG. 2. The second network device 120 predicts (207) the QoE measurement result based on the QoE report and auxiliary information at the second network device 120. Additionally or alternatively, the prediction of the QoE measurement result when the terminal device is under the second network device is performed based on an artificial intelligence/machine learning (AI/ML) model. Optionally, the second network device 120 may input the QoE report and the auxiliary information into the artificial intelligence/machine learning (AI/ML) model, to obtain the predicted QoE measurement result. For example, after receiving the QoE report, the second network device 120 triggers a local AI model to predict a QoE parameter of the UE. In this embodiment of this application, the predicted QoE parameter is only for the RAN-visible QoE parameter, and does not involve QoE parameter prediction in an application-layer report container, because this part is transparently transmitted on a RAN side in a form of a container, that is, is invisible to the RAN side.

FIG. 3 is a diagram of AI input/output related to an embodiment of this disclosure. A candidate network device (for example, the second network device 120 or the third network device) may predict a QoE result of the UE in a candidate target cell, that is, a pQoE metric (metric), through an AI model based on pQoE auxiliary information (for example, the auxiliary information at the second network device 120 or the third network device) and a historical QoE report. In the figure, the historical QoE report is the received QoE report (203), that is, information related to the QoE prediction sent by the first network device 110.

Alternatively, the auxiliary information may include: historical resource status information of the second network device 120, predicted resource status information of the second network device 120, the identifier of the second network device 120, an identifier of a cell, a time index, a quantity of at least one terminal device, radio resource status information, a quantity of radio resource control RRC connections, historical average signal quality of at least one terminal device, a historical average QoE measurement result of at least one terminal device, a historical average QoS parameter of at least one terminal device, or one or more of the foregoing.

Because the terminal device does not establish a connection to the candidate network device, the candidate network device may associate possible performance of the terminal device in the candidate network device based on historical average UE signal quality and a historical average UE RAN-visible QoE result. A possible implementation of the auxiliary information is as follows:
- gNB resource status
   - Cell identifier
      - Time index
      - Resource status
         - Radio resource status information
         - Quantity of activated UEs
         - Quantity of RRC connections
- Service type
   - Cell identifier
      - Time index
      - Average UE signal quality
         - RSRP
         - RSRQ
         - SINR
         - Bit error rate
         - Throughput
         - Packet loss rate
      - Average UE RAN-visible QoE result
      - Average UE QoS parameter

Alternatively, the auxiliary information may further include: historical resource status information of the second network device 120, predicted resource status information of the second network device 120, the identifier of the second network device 120, an identifier of a cell, a time index, the identifier of the terminal device, signal quality for the terminal device, a QoE measurement result for the terminal device, a QoS parameter for the terminal device, or one or more of the foregoing. Another possible implementation of the auxiliary information may relate to detailed terminal device information, that is, information that may be associated with QoE and that is of the terminal device in the second network device 120, and is as follows:
- gNB resource status
   - Cell identifier
      - Time index
      - Resource status
         - Radio resource status information
         - Quantity of activated UEs
         - Quantity of RRC connections
- Service type
   - UE identifier
      - Cell identifier
         - Time index
         - UE signal quality
            - RSRP
            - RSRQ
            - SINR
            - Bit error rate
            - Throughput
            - Packet loss rate
         - RAN-visible QoE result
         - QoS parameter

Refer to FIG. 2. The second network device 120 sends (210) predicted QoE information (213) about the terminal device to the first network device 110, where the predicted QoE information (213) includes the predicted QoE measurement result. Correspondingly, the first network device 110 receives (215) the predicted QoE information (213) about the terminal device from the second network device 120. Optionally, the first network device 110 receives the predicted QoE information about the terminal device from the third network device. In addition, the predicted QoE information may further include: the identifier of the terminal device, the identifier of the second network device, a service type, an identifier of a cell, a time index, or one or more of the foregoing.

The predicted QoE information (213) is the pQoE metric in FIG. 3, and includes a local QoE result of the UE predicted by the candidate network device. A possible implementation is as follows:
- UE identifier
- gNB identifier
- Service type
   - Cell identifier
      - Time index
      - RAN-visible QoE prediction result

In some embodiments, at least one of the QoE report or the predicted QoE information is transmitted through an Xn interface. The Xn interface is a network interface between NG-RAN nodes (a gNB or an eNB).

Additionally or alternatively, based on the predicted QoE information, the first network device 110 may select, from the second network device 120 and the third network device, a target network device to which the terminal device is to be handed over, and send a first indication to the target network device, where the first indication indicates that the terminal device is to be handed over to the target network device. For example, after receiving pQoE metrics of the plurality of candidate network devices, the first network device 110 selects, based on an implementation, one of cells of the plurality of candidate network devices as a target cell. For example, the first network device 110 may select a candidate cell with a minimum playback delay prediction value as an optimal target cell, and notify a target network device to prepare for handover.

Correspondingly, the second network device 120 may receive the first indication from the first network device 110. Based on the predicted QoE information, the second network device 120 may perform resource optimization for the terminal device. Additionally, the resource optimization may include: selecting a handover manner of the terminal device, optimizing a random access channel RACH resource, optimizing a scheduling transmission resource, or one or more of the foregoing. For example, after a source station notifies a target station to prepare for handover, the target station may optimize a resource for the terminal based on the pQoE metric, for example, selecting a handover manner (DAPS, CHO, and legacy), optimizing a RACH resource, and optimizing a scheduling transmission resource.

In some embodiments, the second network device 120 may further receive measured QoE information from the terminal device, and compare the measured QoE information and the predicted QoE information. The second network device 120 performs, based on the comparison, at least one of updating, training, or monitoring on an AI/ML model for obtaining the predicted QoE measurement result. Alternatively or additionally, the second network device 120 may further send the identifier of the terminal device, the predicted QoE measurement result, and precision of the predicted QoE measurement result, or one or more of the foregoing to the first network device 110. Optionally, an indicator of the precision may be indicated by the first network device 110 to the second network device 120. Additionally, the indicator of the precision may be indicated to the second network device 120 in a handover request regarding the terminal device.

For example, after receiving the QoE measurement result, the target station compares the QoE measurement result and a predicted pQoE metric, and may perform AI model optimization/monitoring. In addition, because the target station has sent the pQoE metric to the source station for selecting a target cell, the target station may also indicate a real value or precision of pQoE to the source station, that is, pQoE feedback.

In one example, the pQoE feedback may be a UE identifier and a pQoE metric. In another example, the pQoE feedback may be pQoE precision. In this manner, the indicator of the precision may be specified by the source station in advance. For example, the indicator of the precision is indicated in the handover request as an AI model indicator such as macro-averaging (Macro-averaging), micro-averaging (Micro-averaging), a mean absolute error (MAE, Mean Absolute Error), or a mean squared error (MSE, Mean Squared Error). The mean absolute error is an expected value of an absolute error loss, and is the mean squared error is an expectation of a squared error. The macro-averaging is to first calculate evaluation indicators of each type and then calculate an arithmetic average value of the indicators. The micro-averaging is to first average elements of confusion matrixes, and then calculate each evaluation indicator. The foregoing evaluation indicators include an accuracy (Accuracy) rate, a precision (Precision) rate, a recall (Recall) rate, and a comprehensive evaluation indicator (F1). The accuracy rate is a quantity of correctly classified samples divided by a total quantity of samples. The precision rate is a quantity of samples that are predicted to be positive and correct divided by a quantity of samples that are predicted to be positive. The recall rate is a quantity of samples that are predicted to be positive and correct divided by a quantity of samples that are marked as positive. The comprehensive evaluation indicator is a weighted harmonic mean of the precision rate and the recall rate, that is, F1=2 (Precision+Recall)/(Precision*Recall).

Correspondingly, that the first network device 110 selects from the second network device 120 and the third network device, the target network device to which the terminal device is to be handed over may include selecting the second network device 120 as the target network device. The first network device 110 may receive the identifier of the terminal device, the predicted QoE measurement result, the precision of the predicted QoE measurement result, or one or more of the foregoing from the second network device 120.

In some embodiments, based on determining that the predicted QoE measurement result is less than the threshold, the second network device 120 may further send a second indication to the first network device 110, where the second indication indicates that the second network device 120 rejects handover of the terminal device. For example, if a candidate target station evaluates that a pQoE metric result is excessively poor, that is, the candidate target station does not accept the handover of the UE, the candidate target station may indicate the source station to reject the handover. Optionally, a reason for rejecting the handover may be carried, for example, pQoE is lower than the threshold. Additionally, when the predicted QoE measurement result is less than the threshold, the first network device 110 may receive the second indication from the second network device 120, where the second indication indicates that the second network device 120 rejects handover of the terminal device.

In the process 200, it is specified that specific content of the QoE report and the predicted QoE information, and the QoE report and the predicted QoE information are transmitted through the Xn interface. The candidate target station predicts a local QoE result of the UE, the source station selects a target station based on the predicted QoE information, and the target station performs resource optimization based on the predicted QoE information. In this manner, the candidate target station may predict a local QoE result of a target UE and then send the result to the source station, so that the source station and the target station may identify a possible QoE problem in advance. The source station selects the target cell based on the predicted QoE information, and the target station optimizes resource allocation based on the predicted QoE information. This helps to improve overall UE satisfaction and radio resource efficiency.

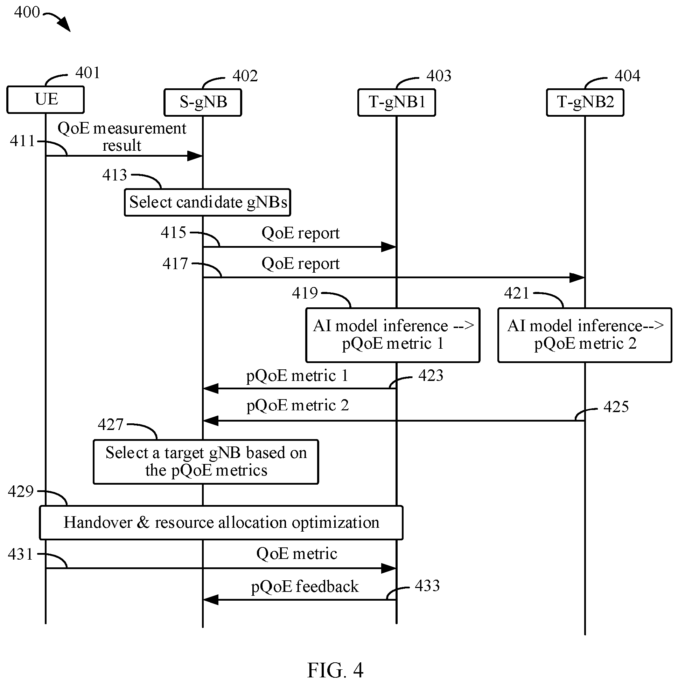

FIG. 4 illustrates a first example process of a communication process according to some embodiments of this disclosure, which may be considered as a specific implementation of the communication process 200 in FIG. 2. The first example process includes a UE 401, an S-gNB 402 (that is, a source station 402), a T-gNB1 403 (that is, a candidate target station 403), and a T-gNB2 404 (that is, a candidate target station 404).

In 411: The UE 401 sends a QoE measurement result to the S-gNB 402. For content of the QoE measurement result, refer to specific content of the QoE measurement result at the Uu interface. Details are not described herein again.

In 413: The S-gNB 402 triggers a procedure of selecting a candidate target station and a target cell.

Then, the S-gNB 402 sends a QoE report to each selected candidate target station.

In 415, the S-gNB 402 sends a QoE report of the UE 401 to the T-gNB1 403. For content of the QoE report, refer to the embodiment in process 200.

In 417, the S-gNB 402 sends the QoE report of the UE 401 to the T-gNB2 404. The QoE report may be used by the candidate target station to predict a QoE result of the UE 401 in the candidate target station, that is, the QoE report may be used as input data of an AI model used to predict QoE in the candidate target station.

The candidate target station receives the QoE report and predicts a QoE parameter of the UE 401 in the candidate target cell.

In 419, the T-gNB1 403 infers the QoE parameter of the UE 401 in the candidate target cell, that is, a pQoE metric 1, by using a local AI model. For content of the QoE parameter, refer to the embodiment of the predicted QoE information in the process 200.

In 421, the T-gNB2 404 infers the QoE parameter of the UE 401 in the candidate target cell, that is, a pQoE metric 2, by using a local AI model.

In 423, the T-gNB1 403 sends a predicted QoE result, that is, the pQoE metric 1, to the S-gNB 402. For content of the predicted QoE result, refer to the embodiment of the predicted QoE information in the process 200.

In 425, the T-gNB2 404 sends a predicted QoE result, that is, the pQoE metric 2, to the S-gNB 402.

If a pQoE metric result evaluated by each of the T-gNB1 403 and the T-gNB2 404 is excessively poor, the T-gNB1 403 and the T-gNB2 404 may not accept handover of the UE. In this case, the candidate target station may indicate the source station to reject the handover. Optionally, a reason for rejecting the handover may be carried in an indication, for example, the pQoE metric is lower than a threshold.

In 427, after receiving the pQoE metric, the S-gNB 402 selects a target cell and a target gNB based on an implementation.

In 429: The S-gNB 402 notifies a selected target station to prepare for handover. The target station may optimize a resource for the UE 401 based on the pQoE metric. For a specific resource optimization manner, refer to the embodiment in the process 200.

In 431, the UE 401 may send an actual QoE metric to the T-gNB1 403. For content of the actual QoE metric, refer to specific content of the QoE measurement result at the Uu interface.

In 433, after receiving the actual QoE metric, the T-gNB1 403 compares the actual QoE metric and a predicted pQoE metric, and may send pQoE feedback to the S-gNB 402. For content of the pQoE feedback, refer to the embodiment in the process 200.

In the first example process, the candidate target station predicts a local QoE parameter of the UE, and sends the local QoE parameter to the source station. Based on the pQoE metric, the source station selects the target cell and the target station performs network optimization.

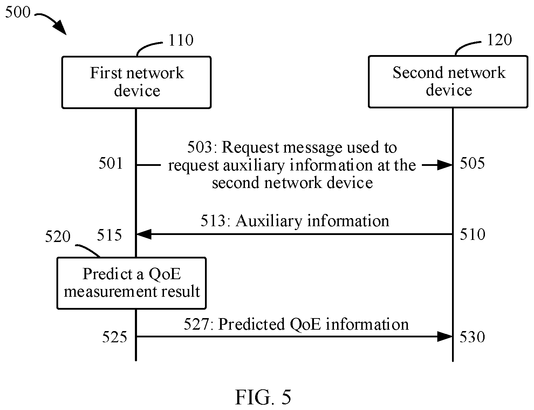

FIG. 5 is a diagram of second interaction signaling of a communication process according to some embodiments of this disclosure. For clarity of discussion without any limitation, a process 500 is discussed with reference to FIG. 1A.

In the process 500, a first network device 110 sends (501), to a second network device 120, a request message (503) used to request auxiliary information at the second network device 120, where the auxiliary information is used to predict a quality of experience (QoE) measurement result when the terminal device is under the second network device 120. The request message is used by a source station to request information related to predicted QoE from a candidate target station.

Additionally or alternatively, the request message may include: a measurement identifier identifying an auxiliary information request process, an identifier of the second network device, an identifier of a cell, a list of at least one terminal device identifier selected by the first network device, a service type, a third indication for content of the auxiliary information, time information for the auxiliary information, or one or more of the foregoing.

For example, a possible request message implementation is as follows:
- Measurement ID (Measurement ID)
- gNB identifier
- Cell identifier
   - UE identifier list
   - Service type
   - Request time indication
      - Time point
      - Time segment
   - pQoE auxiliary information request indication
      - RAN-visible QoE measurement/prediction result
      - QoS parameter
      - Radio configuration
      - Resource status measurement/prediction result
         - Radio resource status information
         - Quantity of activated UEs
         - Quantity of RRC connections
      - Signal quality measurement/prediction result
         - RSRP
         - RSRQ
         - SINR
         - Bit error rate
         - Throughput
         - Packet loss rate
   - Reporting period

The measurement ID is used to identify a specific pQoE auxiliary information request process. The UE identifier list is optional, and is used to indicate a candidate target station to select a UE, for example, a UE whose buffer level (buffer level) is lower than a threshold 1 in a service type 1 in a cell 1. If the UE identifier list is not carried, average UE information is requested by default. The request time indication is used to indicate a specific time segment of pQoE auxiliary information provided by the candidate target station. A specific implementation form is not limited, and may be a time point or a time segment. The service type is used to indicate a specific service or specific services for which pQoE auxiliary information is requested. The pQoE auxiliary information request indication information is used to indicate specific auxiliary information provided by the candidate target station, and may include at least one of the following: the RAN-visible QoE measurement/prediction result, the radio resource status measurement/prediction result, the QoS parameter, the radio configuration, and the signal quality measurement/prediction result. An implementation form of the pQoE auxiliary information request indication information may be 16 bits. For example, a 2^{nd} bit is 1, indicating that the QoS parameter is requested. The reporting period is used to indicate a time interval at which the candidate target station reports the pQoE auxiliary information each time. If the reporting period is carried, periodic reporting is performed by default. If the reporting period is not carried, one-time reporting is performed by default, that is, the candidate target station reports all pQoE auxiliary information at a time based on the request time indication information.

Additionally, the first network device 110 may further send a request message to the third network device to which the terminal device can be handed over. Optionally, the first network device 110 may receive the auxiliary information from the third network device. It should be understood that the first network device (that is, the source station) may send a request message to one or more candidate target stations, and receive auxiliary information from the one or more candidate stations.

The second network device 120 sends (510) auxiliary information (513) to the first network device 110 based on the received (505) request message (503). Correspondingly, the first network device 110 receives (515) the auxiliary information (513) from the second network device 120. For example, a pQoE auxiliary information message may be pQoE auxiliary information that can be provided by the candidate target station after the candidate target station receives a pQoE auxiliary information request message.

Additionally or alternatively, the auxiliary information may include: the measurement identifier, the identifier of the second network device, the identifier of the cell, the list of at least one terminal device identifier, the service type, the content of the auxiliary information indicated by the third indication, a fourth indication of content of unsupported auxiliary information, a time index, or one or more of the foregoing.

Additionally, content of the auxiliary information may include: historical QoE information, predicted QoE information, historical resource status information, predicted resource status information, a QoS parameter, a radio configuration, historical signal quality, predicted signal quality, or one or more of the foregoing.

In some embodiments, implementation of the auxiliary information may be as follows:
- Measurement ID (Measurement ID)
- gNB identifier
- Cell identifier
   - UE identifier list
   - Service type
   - Time index
   - pQoE auxiliary information
      - RAN-visible QoE measurement/prediction result
      - Resource status measurement/prediction result
         - Radio resource status information
         - Quantity of activated UEs
         - Quantity of RRC connections
      - QoS parameter
      - Radio configuration
      - Signal quality measurement/prediction result
         - RSRP
         - RSRQ
         - SINR
         - Bit error rate
         - Throughput
         - Packet loss rate
   - Unsupported pQoE auxiliary information indication
      - Unsupported pQoE auxiliary information list
      - Reason

The unsupported pQoE auxiliary information indication indicates specific pQoE auxiliary information that cannot be supported in reporting by the source station and a reason therefor, for example, the candidate target station does not support AI prediction.

Still refer to FIG. 5. The first network device 110 predicts (520) a QoE measurement result based on the auxiliary information and a QoE report, where the QoE report includes information that is at the first network device 110 and that is used to predict the QoE measurement result.

In some embodiments, the first network device 110 may input the QoE report and the auxiliary information into an artificial intelligence/machine learning (AI/ML) model, to obtain a predicted QoE measurement result. For example, after receiving the pQoE auxiliary information, the source station predicts a QoE parameter of the terminal device in the candidate target station based on a local AI model. It should be understood that the predicted QoE parameter in this disclosure is only for a RAN-visible QoE parameter, and does not involve QoE parameter prediction in an application-layer report container, because this part is transparently transmitted on a RAN side in a form of a container, that is, is invisible to the RAN side.

For input/output of the AI/ML model, refer to FIG. 3. The source station may predict, based on the pQoE auxiliary information and a historical QoE report, a QoE result of the UE in the candidate target cell by using the AI model, that is, a pQoE metric. The pQoE auxiliary information is auxiliary information that is related to QoE prediction and that is sent by the candidate target station. The historical QoE report is information related to QoE prediction collected by the source station based on an implementation, and may include: the time index, a RAN-visible QoE measurement result, the service type, the cell of the identifier, a QoS parameter, a radio configuration, resource status information, signal quality of the UE in the candidate target cell, or one or more of the foregoing. The radio configuration may include dual connectivity (DC), carrier aggregation (CA), or the like. The signal quality may include RSRP, RSRQ, an SINR, a bit error rate, a throughput, and the like. A possible implementation of the pQoE metric is as follows:
- UE identifier
   - Candidate target gNB identifier
   - Service type
      - Cell identifier
         - Time index
         - RAN-visible QoE prediction result

After predicting pQoE metrics of the UE in the candidate target stations, the source station selects one of the candidate target stations as a target cell based on the implementation. For example, the source station may select a candidate target cell with a minimum playback delay prediction value as an optimal target cell.

Still refer to FIG. 5. The first network device 110 sends (525) predicted QoE information (527) about the terminal device to the second network device 120, where the predicted QoE information includes the predicted QoE measurement result. In addition, the predicted QoE information may further include: an identifier of the terminal device, the identifier of the second network device, the service type, the identifier of the cell, the time index, or one or more of the foregoing. Additionally or alternatively, the predicted QoE information may be transmitted through an Xn interface.

Optionally, the first network device 110 may select, from the second network device 120 and the third network device based on the predicted QoE information, a target network device to which the terminal device is to be handed over. The second network device 120 is determined as the target network device, and the first network device 110 may send the predicted QoE information to the second network device 120. Correspondingly, the second network device 120 receives (530) the predicted QoE information (527) from the first network device 110.

In some embodiments, the first network device 110 may send a first indication to the second network device 120, where the first indication may indicate that the terminal device is to be handed over to the second network device 120. Correspondingly, the second network device 120 may receive the first indication from the first network device 110. Based on the predicted QoE information, the second network device 120 may perform resource optimization for the terminal device. Additionally, the resource optimization may include: selecting a handover manner of the terminal device, optimizing a random access channel RACH resource, optimizing a scheduling transmission resource, or one or more of the foregoing. For example, after the source station notifies the target station to prepare for handover, the target station may optimize a resource for the terminal based on a pQoE metric, for example, selecting a handover manner (DAPS, CHO, and legacy), optimizing a RACH resource, and optimizing a scheduling transmission resource.

Optionally, the second network device 120 may receive measured QoE information from the terminal device, and compare the measured QoE information and the predicted QoE information. Based on the foregoing comparison, the second network device 120 may evaluate precision of the predicted QoE measurement result. For example, after receiving the measured QoE measurement result, the target station compares the pQoE measurement result and a pQoE measurement metric that is received from the source station, and may evaluate pQoE precision. Additionally, the second network device 120 may send the identifier of the terminal device, the predicted QoE measurement result, the precision of the predicted QoE measurement result, or one or more of the foregoing to the first network device 110. For example, the target station may also indicate a true value or precision of pQoE, that is, pQoE feedback, to the source station, to assist the source station in training/monitoring the AI model. Correspondingly, the first network device 110 may further receive the identifier of the terminal device, the predicted QoE measurement result, the precision of the predicted QoE measurement result, or one or more of the foregoing from the second network device 120. Based on the received information, the first network device 110 may perform updating, training, or monitoring on an AI/ML model for obtaining the predicted QoE measurement result.

In some embodiments, an indicator of the precision may be indicated by the first network device 110 to the second network device 120. Optionally, the indicator of the precision may be indicated to the second network device 120 in a handover request regarding the terminal device.

In one example, the pQoE feedback may be a UE identifier and a pQoE metric. In another example, the pQoE feedback may be pQoE precision. In this manner, the indicator of the precision may be specified by the source station in advance. For example, the indicator of the precision is indicated in the handover request as an AI model indicator such as macro-averaging (Macro-averaging), micro-averaging (Micro-averaging), a mean absolute error (MAE, Mean Absolute Error), or a mean square error (MSE, Mean Squared Error). The mean absolute error is an expected value of an absolute error loss, and is the mean squared error is an expectation of a squared error. The macro-averaging is to first calculate evaluation indicators of each type and then calculate an arithmetic average value of the indicators. The micro-averaging is to first average elements of confusion matrixes, and then calculate evaluation indicators. The foregoing evaluation indicators include an accuracy (Accuracy) rate, a precision (Precision) rate, a recall (Recall) rate, and a comprehensive evaluation indicator (F1). The accuracy rate is a quantity of correctly classified samples divided by a total quantity of samples. The precision rate is a quantity of samples that are predicted to be positive and correct divided by a quantity of samples that are predicted to be positive. The recall rate is a quantity of samples that are predicted to be positive and correct divided by a quantity of samples that are marked as positive. The comprehensive evaluation indicator is a weighted harmonic mean of the precision rate and the recall rate, that is, F1=2 (Precision+Recall)/(Precision*Recall).

In the process 500, the source station requests a mechanism of pQoE auxiliary information from the target station, and a QoE result of the UE at the candidate target station is predicted by the source station. In this manner, the source station may predict the QoE result of the UE at the candidate target station, so that the source station and the candidate target station may identify a possible QoE problem in advance. The source station selects the target cell based on the predicted QoE information, and the target station optimizes resource allocation based on the predicted QoE information. This helps to improve overall UE satisfaction and radio resource efficiency.

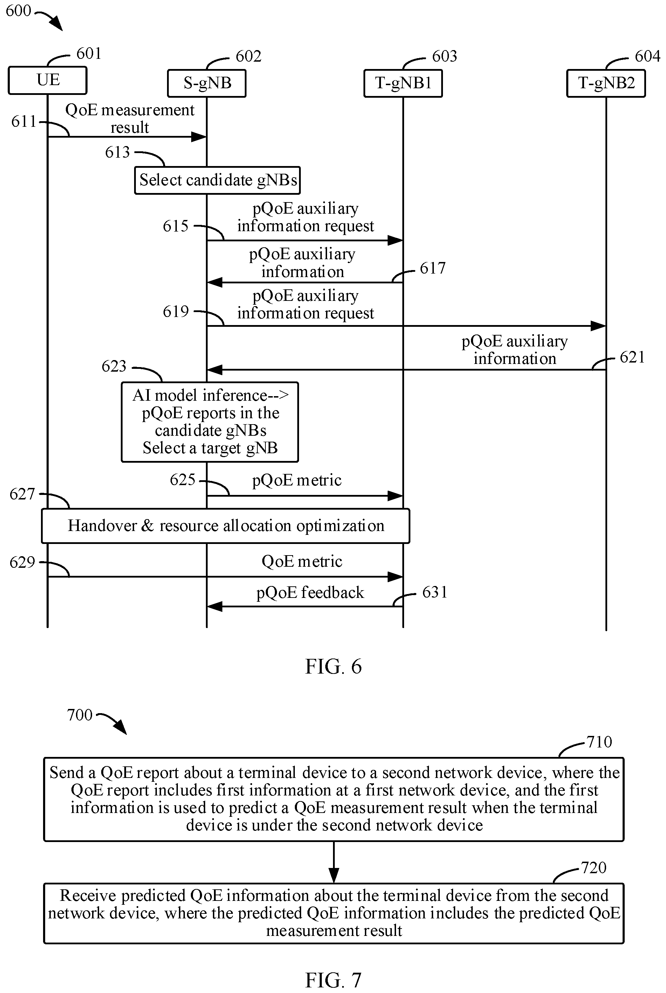

FIG. 6 illustrates a second example process of a communication process according to some embodiments of this disclosure. It may be considered as a specific implementation of the communication process 500 in FIG. 5. The second example process includes a UE 601, an S-gNB 602 (that is, a source station 602), a T-gNB1 603 (that is, a candidate target station 603), and a T-gNB2 604 (that is, a candidate target station 604).

In 611: The UE 601 sends a QoE measurement result to the S-gNB 602. For content of the QoE measurement result, refer to specific content of the QoE measurement result at the Uu interface. Details are not described herein again.

In 613: The S-gNB 602 triggers a procedure of selecting a candidate target station and a target cell.

Then, the S-gNB 602 sends a pQoE auxiliary information request message to each of selected candidate target stations.

In 615, the S-gNB 602 sends the pQoE auxiliary information request message to the T-gNB1 603. For specific content of the pQoE auxiliary information request message, refer to the embodiment of the request message in the process 500.

In 619, the S-gNB 602 sends the pQoE auxiliary information request message to the T-gNB2 604.

Correspondingly, in 617, the T-gNB1 603 sends pQoE auxiliary information to the S-gNB 602. For specific content of the pQoE auxiliary information, refer to the embodiment of the auxiliary information in the process 500.

In 621, the T-gNB2 604 sends the pQoE auxiliary information to the S-gNB 602.

In 623, after receiving the pQoE auxiliary information, the S-gNB 602 predicts a QoE parameter of the UE 601 in a candidate gNB based on a local AI model, that is, a pQoE report in the candidate gNB. For specific content of the QoE parameter, refer to the embodiment of the predicted QoE information in the process 500.

In 625, the S-gNB 602 sends a predicted QoE result, that is, a pQoE metric, to the T-gNB1 603. For specific content of the pQoE metric, refer to the embodiment of the predicted QoE information in the process 500.

In 627, the T-gNB1 603 optimizes resource allocation based on pQoE, the S-gNB 602 notifies a target station to prepare for handover, and the target station may optimize a resource for the UE 601 based on the pQoE metric. For a specific resource optimization manner, refer to the embodiment in the process 500.

In 629, the UE 601 further sends the QoE measurement result to the T-gNB1 603. For content of the QoE measurement result, refer to specific content of the QoE measurement result at the Uu interface. After receiving the QoE measurement result, the T-gNB1 603 compares the QoE measurement result and the received pQoE measurement, and may evaluate pQoE precision.

In 631, the T-gNB1 603 may indicate a true value or precision of the pQoE, that is, pQoE feedback, to the S-gNB 602 to assist the source station in training/monitoring the AI model. For content of the pQoE feedback, refer to the embodiment in the process 500.

In the second example process, the source station predicts the QoE parameter of the UE in the candidate target station. Based on the pQoE metric, the source station selects the target cell and the target station performs network optimization.

FIG. 7 is a flowchart of a method 700 implemented at a first network device according to an embodiment of this disclosure. For clarity of discussion without any limitation, the process 700 is discussed with reference to FIG. 1A. In a possible implementation, the method 700 may be implemented by the first network device 110 in the communication system 100A. In another possible implementation, the method 700 may alternatively be implemented by another communication device independent of the communication system 100A. For example, the following describes the method 700 by using an example in which the method 700 is implemented by the network device 110 in the communication system 100A.

In a box 710, the first network device 110 sends a QoE report about the terminal device to the second network device 120, where the QoE report includes first information at the first network device, and the first information is used to predict a QoE measurement result when the terminal device is under the second network device. In a box 720, the first network device 110 receives predicted QoE information about the terminal device from the second network device 120, where the predicted QoE information includes the predicted QoE measurement result.

In some example embodiments, the QoE report may include: a time index, a QoE measurement result, a service type, an identifier of the terminal device, an identifier of the first network device, an identifier of the second network device, an identifier of a cell, a quality of service QoS parameter, a radio configuration, resource status information, signal quality of the terminal device in a cell of the second network device, or one or more of the foregoing.

In some example embodiments, the predicted QoE information may further include: the identifier of the terminal device, the identifier of the second network device, the service type, the identifier of the cell, the time index, or one or more of the foregoing.

In some example embodiments, the first network device 110 may further send the QoE report to the third network device to which the terminal device can be handed over. In some example embodiments, the first network device 110 may further receive the predicted QoE information about the terminal device from the third network device. In some example embodiments, the first network device 110 may further select, from the second network device and the third network device based on the predicted QoE information, a target network device to which the terminal device is to be handed over, and send a first indication to the target network device, where the first indication indicates that the terminal device is to be handed over to the target network device.

In some example embodiments, that the first network device 110 may further select, from the second network device and the third network device, the target network device to which the terminal device is to be handed over includes selecting the second network device as the target network device, and the first network device 110 may further receive the following information from the second network device: the identifier of the terminal device, the predicted QoE measurement result, precision of the predicted QoE measurement result, or one or more of the foregoing.

In some example embodiments, an indicator of the precision may be indicated by the first network device 110 to the second network device, and the indicator of the precision may be indicated to the second network device in a handover request regarding the terminal device.

In some example embodiments, when the predicted QoE measurement result is less than a threshold, the first network device 110 may receive a second indication from the second network device, where the second indication indicates that the second network device rejects handover of the terminal device.

In some example embodiments, the prediction of the QoE measurement result when the terminal device is under the second network device may be performed based on an artificial intelligence/machine learning (AI/ML) model.

In some example embodiments, at least one of the QoE report or the predicted QoE information may be transmitted through an Xn interface.

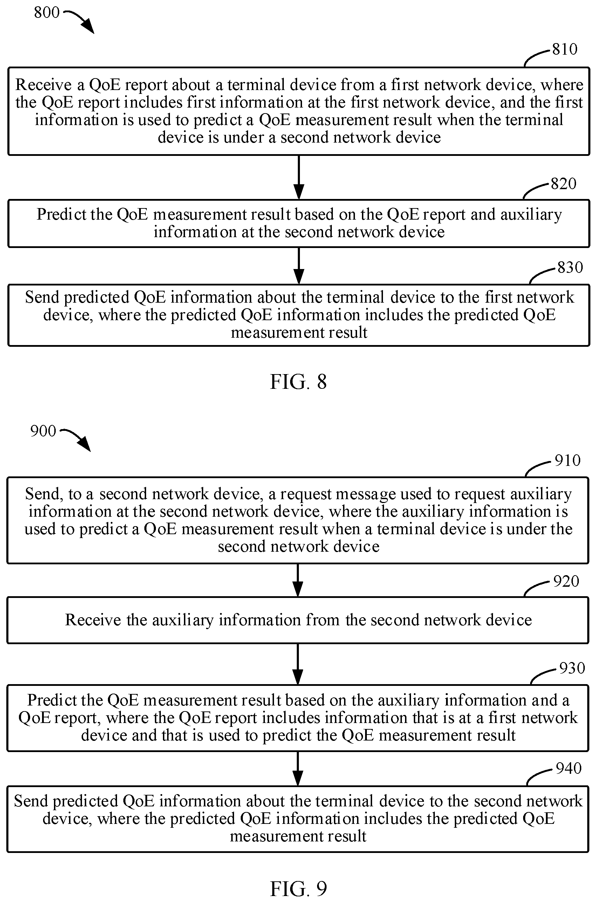

FIG. 8 is a schematic flowchart of a method 800 implemented at a second network device according to an embodiment of this disclosure. For clarity of discussion without any limitation, the process 800 is discussed with reference to FIG. 1A. In a possible implementation, the method 800 may be implemented by the second network device 120 in the communication system 100A. In another possible implementation, the method 800 may alternatively be implemented by another communication device independent of the communication system 100A. For example, the following describes the method 700 by using an example in which the method 700 is implemented by the second network device 120 in the communication system 100A.

In a box 810, the second network device 120 receives a QoE report about the terminal device from the first network device, where the QoE report includes first information at the first network device, and the first information is used to predict a QoE measurement result when the terminal device is under the second network device. In a box 820, the QoE measurement result is predicted based on the QoE report and auxiliary information at the second network device. In a box 830, the second network device 120 sends predicted QoE information about the terminal device to the first network device 110, where the predicted QoE information includes the predicted QoE measurement result.

In some example embodiments, predicting the QoE measurement result may include inputting the QoE report and the auxiliary information into an artificial intelligence/machine learning (AI/ML) model, to obtain the predicted QoE measurement result.

In some example embodiments, the QoE report may include: a time index, a QoE measurement result, a service type, an identifier of the terminal device, an identifier of the first network device, an identifier of the second network device, an identifier of a cell, a quality of service QoS parameter, a radio configuration, resource status information, signal quality of the terminal device in a cell of the second network device, or one or more of the foregoing.

In some example embodiments, the auxiliary information may include: historical resource status information of the second network device, predicted resource status information of the second network device, the identifier of the second network device, an identifier of a cell, a time index, a quantity of at least one terminal device, radio resource status information, a quantity of radio resource control RRC connections, historical average signal quality of at least one terminal device, a historical average QoE measurement result of at least one terminal device, a historical average QoS parameter of at least one terminal device, or one or more of the foregoing.

In some example embodiments, the auxiliary information may further include: the historical resource status information of the second network device, the predicted resource status information of the second network device, the identifier of the second network device, the identifier of the cell, the time index, the identifier of the terminal device, signal quality for the terminal device, a QoE measurement result for the terminal device, a QoS parameter for the terminal device, or one or more of the foregoing. In some example embodiments, the predicted QoE information may further include: the identifier of the terminal device, the identifier of the second network device, the service type, the identifier of the cell, the time index, or one or more of the foregoing.

In some example embodiments, the second network device 120 may further receive a first indication from the first network device, where the first indication indicates that the terminal device is to be handed over to the second network device; and perform resource optimization for the terminal device based on the predicted QoE information. In some example embodiments, the resource optimization may include: selecting a handover manner of the terminal device, optimizing a random access channel RACH resource, optimizing a scheduling transmission resource, or one or more of the foregoing.

In some example embodiments, the second network device 120 may further receive measured QoE information from the terminal device; compare the measured QoE information and the predicted QoE information; and perform, based on the comparison, at least one of updating, training, or monitoring of an AI/ML model for obtaining the predicted QoE measurement result.

In some example embodiments, the second network device 120 may further send the following information to the first network device: the identifier of the terminal device, the predicted QoE measurement result, precision of the predicted QoE measurement result, or one or more of the foregoing. In some example embodiments, an indicator of the precision may be indicated by the first network device to the second network device 120. In some example embodiments, the indicator of the precision may be indicated to the second network device 120 in a handover request regarding the terminal device.

In some example embodiments, based on determining that the predicted QoE measurement result is less than a threshold, the second network device 120 may further send a second indication to the first network device, where the second indication indicates that the second network device rejects handover of the terminal device. In some example embodiments, at least one of the QoE report or the predicted QoE information may be transmitted through an Xn interface.

FIG. 9 is a schematic flowchart of a method 900 implemented at a first network device 110 according to an embodiment of this disclosure. For clarity of discussion without any limitation, the process 900 is discussed with reference to FIG. 1A. In a possible implementation, the method 900 may be implemented by the first network device 110 in the communication system 100A. In another possible implementation, the method 900 may alternatively be implemented by another communication device independent of the communication system 100A. For example, the following describes the method 900 by using an example in which the method 900 is implemented by the first network device 110 in the communication system 100A.

In a box 910, the first network device 110 sends, to the second network device, a request message used to request auxiliary information at the second network device, where the auxiliary information is used to predict a QoE measurement result when the terminal device is under the second network device. In a box 920, the first network device 110 receives the auxiliary information from the second network device. In a box 930, the first network device 110 predicts the QoE measurement result based on the auxiliary information and a QoE report, where the QoE report includes information that is at the first network device and that is used to predict the QoE measurement result. In a box 940, the first network device 110 sends predicted QoE information about the terminal device to the second network device, where the predicted QoE information includes the predicted QoE measurement result.

In some example embodiments, predicting the QoE measurement result may include inputting the QoE report and the auxiliary information into an artificial intelligence/machine learning (AI/ML) model, to obtain the predicted QoE measurement result. In some example embodiments, the request message may include: a measurement identifier identifying an auxiliary information request process, an identifier of the second network device, an identifier of a cell, a list of at least one terminal device identifier selected by the first network device, a service type, a third indication for content of the auxiliary information, time information for the auxiliary information, or one or more of the foregoing.

In some example embodiments, the auxiliary information may include: the measurement identifier, the identifier of the second network device, the identifier of the cell, a list of at least one terminal device identifier, the service type, the content of the auxiliary information indicated by the third indication, a fourth indication of content of unsupported auxiliary information, a time index, or one or more of the foregoing. In some example embodiments, the content of the auxiliary information may include: historical QoE information, the predicted QoE information, historical resource status information, predicted resource status information, a QoS parameter, a radio configuration, historical signal quality, predicted signal quality, or one or more of the foregoing. In some example embodiments, the predicted QoE information may further include: the identifier of the terminal device, the identifier of the second network device, the service type, the identifier of the cell, the time index, or one or more of the foregoing.

In some embodiments, the QoE report includes at least one of the following: the time index, the QoE measurement result, the service type, the identifier ID of the terminal device, the identifier of the first network device, the identifier of the second network device, the identifier of the cell, the quality of service QoS parameter, the radio configuration, resource status information, or signal quality of the terminal device in a cell of the second network device.

In some example embodiments, the first network device 110 may send a request message to the third network device to which the terminal device can be handed over, and receive the auxiliary information from the third network device. In some example embodiments, sending the predicted QoE information to the second network device may include: selecting, from the second network device and the third network device based on the predicted QoE information, a target network device to which the terminal device is to be handed over; and sending the predicted QoE information to the second network device.

In some example embodiments, the first network device 110 may send a first indication to the second network device, where the first indication indicates that the terminal device is to be handed over to the second network device. In some example embodiments, the first network device 110 may receive the following information from the second network device: the identifier of the terminal device, the predicted QoE measurement result, precision of the predicted QoE measurement result, or one or more of the foregoing. In some example embodiments, the first network device 110 may perform, based on the foregoing information, at least one of updating, training, or monitoring on an AI/ML model for obtaining the predicted QoE measurement result. In some example embodiments, at least one of the QoE report or the predicted QoE information may be transmitted through an Xn interface.

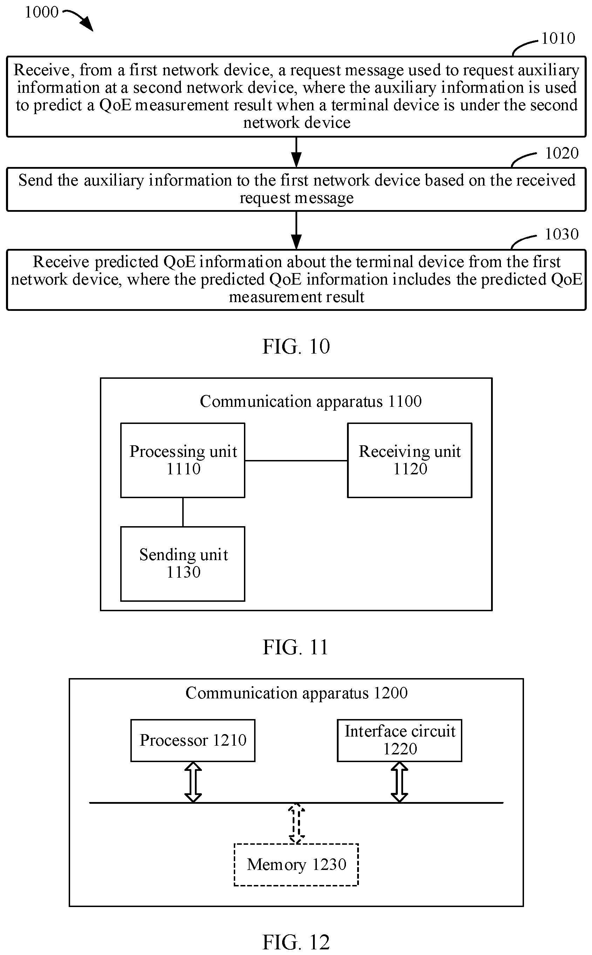

FIG. 10 is a schematic flowchart of a method 1000 implemented at a second network device according to an embodiment of this disclosure. For clarity of discussion without any limitation, the process 1000 is discussed with reference to FIG. 1A. In a possible implementation, the method 1000 may be implemented by the network device 1420 in the communication system 100A. In another possible implementation, the method 1000 may alternatively be implemented by another communication device independent of the communication system 100A. For example, the following describes the method 1000 by using an example in which the method 1000 is implemented by the network device 120 in the communication system 100A.

In a box 1010, the second network device 120 receives, from the first network device, a request message used to request auxiliary information at the second network device 120, where the auxiliary information is used to predict a QoE measurement result when the terminal device is under the second network device 120. In a box 1020, the second network device 120 sends the auxiliary information to the first network device based on the received request message. In a box 1030, the second network device 120 receives predicted QoE information about the terminal device from the first network device, where the predicted QoE information includes the predicted QoE measurement result.

In some example embodiments, the request message may include: a measurement identifier identifying an auxiliary information request process, an identifier of the second network device 120, an identifier of a cell, a list of at least one terminal device identifier selected by the first network device, a service type, a third indication for content of the auxiliary information, time information for the auxiliary information, or one or more of the foregoing.

In some example embodiments, the auxiliary information may include: the measurement identifier, the identifier of the second network device 120, the identifier of the cell, the list of at least one terminal device identifier, the service type, the content of the auxiliary information indicated by the third indication, a fourth indication of content of unsupported auxiliary information, a time index, or one or more of the foregoing. In some example embodiments, the content of the auxiliary information may include: historical QoE information, the predicted QoE information, historical resource status information, predicted resource status information, a QoS parameter, a radio configuration, historical signal quality, predicted signal quality, or one or more of the foregoing.

In some example embodiments, the predicted QoE information may further include: an identifier of the terminal device, an identifier of the second network device 120, the service type, the identifier of the cell, the time index, or one or more of the foregoing. In some example embodiments, the second network device 120 may receive a first indication from the first network device, where the first indication indicates that the terminal device is to be handed over to the second network device; and perform resource optimization for the terminal device based on the predicted QoE information.

In some example embodiments, the second network device 120 may receive measured QoE information from the terminal device; compare the measured QoE information and the predicted QoE information; and evaluate precision of the predicted QoE measurement result based on the comparison.

In some example embodiments, the second network device 120 may send the following information to the first network device: the identifier of the terminal device, the predicted QoE measurement result, the precision of the predicted QoE measurement result, or one or more of the foregoing. In some example embodiments, an indicator of the precision may be indicated by the first network device to the second network device 120, and the indicator of the precision may be indicated to the second network device 120 in a handover request regarding the terminal device.

In some example embodiments, based on determining that the predicted QoE measurement result is less than a threshold, the second network device 120 may send a second indication to the second network device 120, where the second indication indicates that the second network device 120 rejects handover of the terminal device. In some example embodiments, the prediction of the QoE measurement result when the terminal device is under the second network device 120 may be performed based on an artificial intelligence/machine learning (AI/ML) model. In some example embodiments, the predicted QoE information may be transmitted through an Xn interface.

FIG. 11 is a diagram of a possible structure of a communication apparatus according to an embodiment of this application. These communication apparatuses may implement functions of the terminal apparatus or the network apparatus in the foregoing method embodiments. Therefore, beneficial effects of the foregoing method embodiments can also be implemented. In this embodiment of this application, the communication apparatus may be the first network device 110, the second network device 120, the third network device 130, or the terminal device 140 shown in FIG. 1A, or may be a module (for example, a chip) used in the first network device 110, the second network device 120, the third network device 130, or the terminal device 140.

As shown in FIG. 11, the communication apparatus 1100 includes a processing unit 1110, a receiving unit 1120, and a sending unit 1130. The communication apparatus may be configured to implement functions of the network apparatus in the method embodiments shown in any one of FIG. 2, FIG. 5, and FIG. 7 to FIG. 10. In some embodiments, the processing unit may be a processor, the sending unit may be a transmitter, and the receiving unit may be a receiver.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to store instructions executed by the processor 1210, store input data required by the processor 1210 to run instructions, or store data generated after the processor 1210 runs instructions.

When the communication apparatus 1200 is configured to implement the methods in the foregoing method embodiments, the processor 1210 is configured to perform a function of the processing unit 1110, and the interface circuit 1220 is configured to perform functions of the receiving unit 1120 and the sending unit 1130.

When the communication apparatus is a chip used in the first network device 110, the second network device 120, the third network device 130, or the terminal device 140, the device chip implements a function of the first network device 110, the second network device 120, the third network device 130, or the terminal device 140 in the foregoing method embodiments. The device chip receives information from another module (for example, a radio frequency module or an antenna) in the first network device 110, the second network device 120, the third network device 130, or the terminal device 140, and the information may be sent by another first network device 110, another second network device 120, another third network device 130, or another terminal device 140. Alternatively, the terminal device chip sends information to another module (for example, a radio frequency module or an antenna) in the first network device 110, the second network device 120, the third network device 130, or the terminal device 140, and the information is sent to another first network device 110, another second network device 120, another third network device 130, or another terminal device 140.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor.

An embodiment of this application provides a communication system. The communication system may include the communication apparatus in the embodiment shown in FIG. 11, for example, the first network device 110, the second network device 120, the third network device 130, or the terminal device 140. Optionally, the first network device 110, the second network device 120, the third network device 130, or the terminal device 140 in the communication system may perform the communication method shown in any one of FIG. 2, FIG. 5, and FIG. 7 to FIG. 10.

An embodiment of this application further provides a circuit. The circuit may be coupled to a memory, and may be configured to perform a procedure related to the first network device 110, the second network device 120, the third network device 130, or the terminal device 140 in any one of the foregoing method embodiments. A chip system may include a chip, and may further include another component, like a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification is intended to include but not limited to these memories and any memory of another appropriate type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the system, apparatus, and module described above, refer to the corresponding process in the foregoing method embodiments. Details are not described herein.

In several embodiments provided by this application, it should be understood that the disclosed communication method and apparatus may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can be used to carry or store expected program code in a form of an instruction or a data structure and can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A method applied to a first network device, comprising:
sending a quality of experience (QoE) report about a terminal device to a second network device, wherein the QoE report comprises first information at the first network device, and the first information is used to predict a QoE measurement result when the terminal device is under the second network device; and
receiving predicted QoE information about the terminal device from the second network device, wherein the predicted QoE information comprises the predicted QoE measurement result.

2. The method according to claim 1, wherein the QoE report comprises at least one of:
a time index, a QoE measurement result, a service type, an identifier ID of the terminal device, an identifier of the first network device, an identifier of the second network device, an identifier of a cell, a quality of service QoS parameter, a radio configuration, resource status information, or signal quality of the terminal device in a cell of the second network device.

3. The method according to claim 1 or 2, wherein the predicted QoE information further comprises at least one of:
the identifier of the terminal device, the identifier of the second network device, the service type, the identifier of the cell, or the time index.

4. The method according to any one of claims 1 to 3, further comprising:
sending the QoE report to a third network device to which the terminal device can be handed over.

5. The method according to any one of claims 1 to 4, further comprising:
receiving the predicted QoE information about the terminal device from the third network device.

6. The method according to any one of claims 1 to 5, further comprising:
selecting, from the second network device and the third network device based on the predicted QoE information, a target network device to which the terminal device is to be handed over; and
sending a first indication to the target network device, wherein the first indication indicates that the terminal device is to be handed over to the target network device.

7. The method according to claim 6, wherein selecting, from the second network device and the third network device, the target network device to which the terminal device is to be handed over comprises selecting the second network device as the target network device, and the method further comprises:
receiving at least one of the following information from the second network device:
the identifier of the terminal device, the predicted QoE measurement result, or precision of the predicted QoE measurement result.

8. The method according to claim 7, wherein an indicator of the precision is indicated by the first network device to the second network device.

9. The method according to claim 7, wherein an indicator of the precision is indicated to the second network device in a handover request regarding the terminal device.

10. The method according to any one of claims 1 to 9, further comprising:
receiving a second indication from the second network device when the predicted QoE measurement result is less than a threshold, wherein the second indication indicates that the second network device rejects handover of the terminal device.

11. The method according to any one of claims 1 to 10, wherein the prediction of the QoE measurement result when the terminal device is under the second network device is performed based on an artificial intelligence/machine learning (AI/ML) model.

12. The method according to any one of claims 1 to 11, wherein at least one of the QoE report or the predicted QoE information is transmitted through an Xn interface.

13. A method applied to a second network device, comprising:
receiving a quality of experience (QoE) report about a terminal device from a first network device, wherein the QoE report comprises first information at the first network device, the first information is used to predict a QoE measurement result when the terminal device is under the second network device;
predicting the QoE measurement result based on the QoE report and auxiliary information at the second network device; and
sending predicted QoE information about the terminal device to the first network device, wherein the predicted QoE information comprises the predicted QoE measurement result.

14. The method according to claim 13, wherein predicting the QoE measurement result comprises:
inputting the QoE report and the auxiliary information into an artificial intelligence/machine learning (AI/ML) model, to obtain the predicted QoE measurement result.

15. The method according to claim 13, wherein the QoE report comprises at least one of:
a time index, a QoE measurement result, a service type, an identifier ID of the terminal device, an identifier of the first network device, an identifier of the second network device, an identifier of a cell, a quality of service QoS parameter, a radio configuration, resource status information, or signal quality of the terminal device in a cell of the second network device.

16. The method according to any one of claims 13 to 15, wherein the auxiliary information comprises at least one of:
historical resource status information of the second network device, predicted resource status information of the second network device, the identifier of the second network device, the identifier of the cell, the time index, a quantity of at least one terminal device, radio resource status information, a quantity of radio resource control RRC connections, historical average signal quality of at least one terminal device, a historical average QoE measurement result of at least one terminal device, and a historical average QoS parameter of at least one terminal device.

17. The method according to any one of claims 13 to 15, wherein the auxiliary information further comprises at least one of:
historical resource status information of the second network device, predicted resource status information of the second network device, the identifier of the second network device, the identifier of the cell, the time index, the identifier of the terminal device, signal quality for the terminal device, a QoE measurement result for the terminal device, or a QoS parameter for the terminal device.

18. The method according to any one of claims 13 to 17, wherein the predicted QoE information further comprises at least one of:
the identifier of the terminal device, the identifier of the second network device, the service type, the identifier of the cell, or the time index.

19. The method according to any one of claims 13 to 18, further comprising:
receiving a first indication from the first network device, wherein the first indication indicates that the terminal device is to be handed over to the second network device; and
performing resource optimization for the terminal device based on the predicted QoE information.

20. The method according to claim 19, wherein the resource optimization comprises at least one of:
selecting a handover manner of the terminal device;
optimizing a random access channel RACH resource; or
optimizing a scheduling transmission resource.

21. The method according to any one of claims 13 to 20, further comprising:
receiving measured QoE information from the terminal device;
comparing the measured QoE information and the predicted QoE information; and
performing, based on the comparison, at least one of updating, training, or monitoring of an AI/ML model for obtaining the predicted QoE measurement result.

22. The method according to claim 21, further comprising:
sending at least one of the following information to the first network device:
the identifier of the terminal device, the predicted QoE measurement result, or precision of the predicted QoE measurement result.

23. The method according to claim 22, wherein an indicator of the precision is indicated by the first network device to the second network device.

24. The method according to claim 23, wherein the indicator of the precision is indicated to the second network device in a handover request regarding the terminal device.

25. The method according to any one of claims 13 to 24, further comprising:
based on determining that the predicted QoE measurement result is less than a threshold, sending a second indication to the first network device, wherein the second indication indicates that the second network device rejects handover of the terminal device.

26. The method according to any one of claims 13 to 25, wherein at least one of the QoE report or the predicted QoE information is transmitted through an Xn interface.

27. A communication apparatus, comprising a processor and a memory storing instructions, wherein when the instructions are executed by the processor, the communication device is enabled to perform the method according to any one of claims 1 to 12 or any one of claims 13 to 26.

28. A chip, wherein the chip comprises a processing circuit, and the processing circuit is configured to perform the method according to any one of claims 1 to 12 or according to any one of claims 13 to 26.

29. A computer-readable storage medium, wherein the computer-readable storage medium stores instructions, and when the instructions are executed by a communication device, the communication device is enabled to perform the method according to any one of claims 1 to 12 or any one of claims 13 to 26.
